Europäisches Patentamt

European Patent Office

Office européen des brevets

(19)

(11) Veröffentlichungsnummer: **0 123 068**
**B1**

(12) **EUROPÄISCHE PATENTSCHRIFT**

(45) Veröffentlichungstag der Patentschrift:
01.06.88

(51) Int. Cl.⁴: **D 21 B 1/34,** D 21 B 1/32,
D 21 B 1/08

(21) Anmeldenummer: 84102200.7

(22) Anmeldetag: 01.03.84

(54) Verfahren zur Entsorgung eines Stofflösers.

(30) Priorität: 26.03.83 DE 3311082

(43) Veröffentlichungstag der Anmeldung:
31.10.84 Patentblatt 84/44

(45) Bekanntmachung des Hinweises auf die Patenterteilung:
01.06.88 Patentblatt 88/22

(84) Benannte Vertragsstaaten:
AT BE CH DE FR GB IT LI NL SE

(56) Entgegenhaltungen:
DE - A - 2 941 439
DE - B - 2 547 896
GB - A - 1 440 382

(73) Patentinhaber: J.M. Voith GmbH, Postfach 1940 St.
Pöltener Strasse 43, D-7920 Heidenheim (DE)

(72) Erfinder: Bähr, Theodor, Mühlestrasse 6,
D-7920 Heidenheim (DE)
Erfinder: Thumm, Helmut, Robert-Koch-Strasse 64,
D-7920 Heidenheim (DE)

## Beschreibung

Die Erfindung betrifft ein Verfahren entsprechend dem Oberbegriff des Patentanspruchs 1, ferner entsprechende Einrichtungen. Ein solches Verfahren ist bekannt geworden durch die DE-A 2 941 439.

Bei diesem Verfahren wird die Suspension in dem Abzugsapparat so lange umgewälzt und verdünnt bzw. gespült, bis der in der Suspension, die aus dem Stofflöser 1 abgezogen worden ist, enthaltene Schmutz von den übrigen Bestandteilen der Suspension, also insbesondere den Fasern getrennt ist und neben dem Wasser allein noch in dem Abzugsapparat verbleibt. Dann wird dieser Schmutz letztendlich aus dem Abzugsapparat durch eine getrennte Leitung abgeführt. Dies ist jedoch nicht möglich. Es wird nämlich durch die dortige Anordnung ein grosser Anteil des Schmutzes so weit zerteilt, dass er mit den Fasern wieder zurück in den Stofflöser gelangt. Dieser Schmutz ist so weit zerteilt, dass er später nur noch schlecht abzuscheiden ist, obwohl es nunmehr möglich ist, dass dieser feinverteilte Schmutz das Sieb des Stofflösers nicht mehr verstopft. Auf jeden Fall muss dieser Schmutz aber später wieder entfernt werden, was grosse Schwierigkeiten bereiten dürfte.

Die Aufgabe der Erfindung ist es, das Verfahren so auszubilden, dass der Schmutz frühzeitig ohne Schwierigkeiten ausgeschieden werden kann.

Diese Aufgabe wird erfindungsgemäss bei einem Verfahren der eingangs genannten Art durch die Merkmale des kennzeichnenden Teils des Patentanspruchs 1 gelöst. Sehr vorteilhafte Ausgestaltungen des Verfahrens gehen aus den Unteransprüchen hervor.

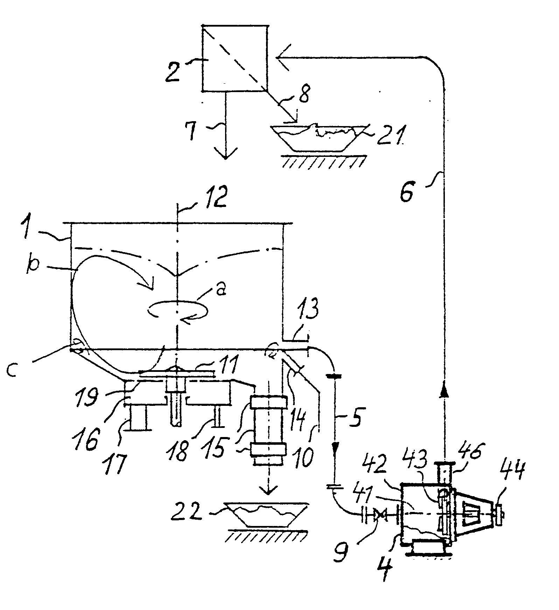

Nachfolgend wird die Erfindung anhand eines in der Zeichnung skizzenhaft dargestellten Ausführungsbeispiels erläutert.

Der Stofflöser ist hier dafür vorgesehen, bei einer hohen Konsistenz von z.B. 8 bis 16% Altpapier aufzulösen. Dies geschieht durch die von dem Rotor 11 erfolgte Wirbelströmung b. Die Rotationsachse des Rotors 11 ist mit 12 bezeichnet und dreht sich in Richtung a. Es entstehen in den Zwickeln des Stofflösers bei c Wirbel, so dass sich dort in den Ecken des Stofflösers Schmutzanteile ansammeln.

Der Rotor 11 rotiert parallel zu einem Sieb 19, das einen Stoffabzugsraum 16 vom übrigen Behälterinhalt des Stofflösers 1 trennt. Aus diesem Abzugsraum 16 wird die Suspension über Stutzen 17 abgezogen. Über Stutzen 18 kann zu dem Zweck noch Verdünnungswasser zugeführt werden.

Es ist nun in Bodennähe seitlich am Behälter der Abzugsstutzen 13 angeordnet. Über die daran angeschlossene Leitung 5 wird Suspension periodisch nach Öffnen des Ventiles 9 dem Abzugsapparat 4 zugeführt. Dieser Abzugsapparat ist im wesentlichen rotationssymmetrisch ausgebildet mit der Rotationsachse 41. Ein Rotor 43 des Abzugsapparates 4 hat in diesem Falle eine mit der Rotationssymmetrieachse 41 fluchtende Rotationsachse. Der Rotor wird angetrieben über Riemenscheibe 44 von einem nicht dargestellten Motor. Die Leitung 5 ist an der Stirnseite 42 des Abzugsapparates 4 angeschlossen.

In dem Abzugsapparat 4 verbleibt die Suspension eine gewisse Zeit, die ausreicht, um die Altpapierfetzen und Stippen, die noch in der Suspension enthalten sind, um ein erhebliches Mass zu zerkleinern. Dann wird das Ventil 9 wieder kurzzeitig geöffnet, so dass der Rotor 43 des Abzugsapparates 4 die Suspension durch den tangentialen Auslass 46 hinausbefördern kann zu dem Sortiergerät 2. Gleichzeitig wird neue Suspension aus dem Stofflöser 1 nachgefördert, die dann auch in dem Abzugsapparat 4 weiter behandelt wird. Dabei ist der Rotor 43 am besten direkt am tangentialen Auslass 46 vorzusehen, um eine gute Abpumpwirkung zu erzielen. Beim Abpumpen wird Suspension durch die Leitung 5 zentral in den Wirbelkern der Strömung im Apparat 4 hineingeleitet.

Das Sortiergerät 2 kann zweckmässig eine um eine horizontale Achse rotierende Siebtrommel sein, der die Suspension an der einen Stirnseite zugeführt wird. Eine solche Siebtrommel ist z.B. durch die DE-AB 2 547 896 bekannt geworden.

Man hat bei dem erfindungsgemässen Verfahren den Vorteil, dass in dem Sortiergerät 2 eine ausreichende Trennung des Schmutzes von den Faserbestandteilen erfolgen kann. In dem Abzugsapparat 4 hingegen wird der Schmutz nicht in starkem Masse zerteilt, z.B. auch aus dem Grunde, dass man die Verweilzeit der Suspension in diesem Apparat nicht zu gross wählt und auch keine besonderen Schneid- oder Trenneinrichtungen vorgesehen sind. Absperrschieber oder -Ventil 9 kann natürlich auch in der Abzugsleitung 6 vorgesehen sein. Der am Sortiergerät 2 anfallende Gutstoff wird über Leitung 7 wieder unmittelbar dem Stofflöser 1 zugeführt, während der anfallende Spuckstoff über Leitung 8 in den Behälter 21 abgelassen wird.

Die Abführung des Schwerschmutzanteils geschieht in der Hauptsache am besten im Stofflöser 1 über dessen Schwerschmutzschleuse 15 in den Aufnahmebehälter 22 hinein. Es ist auch möglich, eine entsprechende Schwerschmutzschleuse am Abzugsapparat 4 vorzusehen. Um den Eintritt in den Abzugsstutzen 13 freizuhalten und die Fasern von dem Schmutz möglichst freizuspülen, wird zweckmässig in dem Bereich des Stofflösers, wo der Abzugsstutzen 13 angeschlossen ist, Verdünnungswasser zugeführt. Dies geschieht über den Stutzen 14 und die daran angeschlossene Leitung 10. Damit ist auch aufgrund der verringerten Konsistenz eine problemlose Abführung der Suspension in den Abzugsapparat 4 und aus diesem hinaus gewährleistet. Dieses Verdünnungswasser kann auch noch dazu benutzt werden, um in dem Stofflöser 1 die für die Auflösung des Altpapiers erforderliche Konsistenz einzustellen.

Das Aufnahmevolumen des Abzugsapparats 4 ist natürlich wesentlich kleiner als das des Stofflösers 1. Die Verweilzeit der Suspension in dem Abzugsapparat 4 kann im allgemeinen zwischen 30 Sekunden und 5, vorzugsweise 3 Minuten liegen, wohingegen die Öffnungszeit des Absperrgliedes 9 im allgemeinen etwa zwischen 3 und 5 Sekunden liegt. Diese wird man zweckmässig so einrichten, dass ein möglichst guter, d.h. weitgehender Austausch der im Abzugsapparat 4 bereits bearbeiteten Suspension gegen frisch aus dem Stofflöser 1 zugeführte erfolgen kann. Schliesslich sei noch vermerkt, dass auch andere Sortiergeräte 2 als eine Sortiertrommel benutzt werden können. So kommt z.B. insbesondere ein Vibrationssortierer in Frage.

In der Teilanmeldung EP-A 0 211 184 zum vorliegenden Patent wird eine Einrichtung zum Auflösen und Reinigen von Altpapier behandelt.

## Patentansprüche

1. Verfahren zur Entsorgung eines Stofflösers (1), aus dem periodisch Suspension in einen Abzugsapparat abgeführt wird, dessen Gehäuse eine rotationssymmetrische Grundform aufweist und bei dem zumindest parallel zur Rotationssymmetrieachse (41) die Achse eines in der Nähe einer Stirnwand des Apparats (4) angeordneten Rotors (43) verläuft und bei dem die Suspension im Bereich der anderen Stirnwand (42) zugeführt wird, dadurch gekennzeichnet, dass die Stoffzufuhr (5) – oder Stoffabzugsleitung (6) des Abzugsapparats (4) taktweise mittels eines Absperrgliedes (9) nur kurzzeitig so lange geöffnet wird, bis der Rotor (43) des Abzugsapparats (4) die alte Suspension aus dem Abzugsapparat herausbefördert und durch neue Suspension aus dem Stofflöser (1) ersetzt hat, dass die Suspension zur Verkleinerung und Auflösung von Stippen und Papierfetzen einige Zeit im Abzugsapparat (4) verbleibt und dass die aus dem Abzugsapparat (4) herausbeförderte Suspension anschliessend in einer Sortiereinrichtung (2) sortiert wird.

2. Verfahren nach Anspruch 1, dadurch gekennzeichnet, dass die Schliessdauer unter 5 Min., insbesondere unter 3 Min., liegt.

3. Verfahren nach einem der Ansprüche 1 oder 2, dadurch gekennzeichnet, dass Verdünnungswasser in die abgezogene Suspension vor Eintritt derselben in den Abzugsapparat (4) eingeleitet wird.

4. Verfahren nach einem der Ansprüche 1 bis 3, dadurch gekennzeichnet, dass der Gutstoff der aus dem Abzugsapparat (4) abgeführten und sortierten Suspension wieder unmittelbar dem Stofflöser (1) zugeführt wird.

5. Verfahren nach einem der Ansprüche 1 bis 4, dadurch gekennzeichnet, dass als zur Sortierung der aus dem Abzugsapparat (4) abgeführten Suspension dienende Sortiereinrichtung eine im wesentlichen um eine horizontale Achse rotierende gelochte Siebtrommel verwendet wird, an deren einem stirnseitigem Ende die Suspension zugeführt und an deren anderem stirnseitigen Ende der Spuckstoff abgeführt wird.

6. Verfahren nach einem der Ansprüche 1 bis 5, dadurch gekennzeichnet, dass im Anschlussbereich der Stoffzufuhrleitung (5) mindestens eine Verdünnungswasserleitung (14) an den Stofflöser (1) angeschlossen wird.

7. Verfahren nach einem der Ansprüche 5 oder 6, dadurch gekennzeichnet, dass der tangentiale Hauptauslass (46) im Bereich des Rotors (43) angeordnet wird.

8. Verfahren nach einem der Ansprüche 5 bis 7, dadurch gekennzeichnet, dass der Rotor zentral genau der Verbindungsleitung (5) gegenüber angeordnet wird.

## Claims

1. A method of disposing of waste from a pulper (1), from which suspension is periodically removed into a discharge device whose housing has a radially symmetrical basic form and in the case of which the axis of a rotor (43), which is arranged adjacent to an end wall of the device (4), extends at least parallel to the axis (41) of radial symmetry and in the case of which the suspension is supplied at the other end wall (42), characterized in that the pulp supply or pulp discharge duct (5 or 6, respectively) is opened for a brief time by means of a valve (9) for only such a time as to allow the rotor (43) of the discharge device (4) to force the old suspension out of the discharge device and to replace it by fresh suspension from the pulper (1), in that the suspension remains some time in the discharge device (4) for the comminution and reduction of flakes and scraps of paper to pulp and in that the suspension conveyed out of the discharge device (4) is then sorted in a sorting device (2).

2. The method as claimed in claim 1 characterized in that the duration of closing is less than 5 minutes and more particularly is less than 3 minutes.

3. The method as claimed in claim 1 or claim 2 characterized in that water for dilution is introduced into the drawn off suspension prior to entry of the latter into the discharge device (4).

4. The method as claimed in any one of the claims 1 through 3 characterized in that the usable material of the suspension which has been supplied from the discharge device (4) and sorted is returned to the pulper (1) directly.

5. The method as claimed in any one of the claims 1 through 4 characterized in that the sorting device serving for sorting the suspension removed from the discharge device (4) is in the form of a perforated sieve drum rotated generally about a horizontal axis, to whose one end the suspension is supplied and from whose other end the unusable material is let off.

6. The method as claimed in any one of the claims 1 through 5 characterized in that at the connection of the pulp supply duct (5) there is a connection with at least one duct (14) for the supply of water for dilution into the pulper (1).

7. The method as claimed in claim 5 or claim 6 characterized in that the tangential main outlet (46) is arranged adjacent to the rotor (43).

8. The method as claimed in any one of the claims 5 through 7 characterized in that the rotor is arranged precisely centrally opposite to the connecting duct (5).

## Revendications

1. Procédé pour éliminer des déchets d'un broyeur (1), hors duquel une suspension est périodiquement évacuée vers un appareil (4) de vidange dont le boîtier présente une forme de base à symétrie de révolution et dont un axe de rotor (43) disposé auprès d'un côté frontal de l'appareil (4) se dirige parallèlement à l'axe symétrie de révolution, procédé suivant lequel la suspension est amenée dans la zone de l'autre côté frontal (42), caractérisé: par le fait que l'arrivée de l'alimentation en pâte (5), où le tuyau de vidange (6) de l'appareil de vidange (4), n'est ouvert, de façon cyclique au moyen d'une vanne d'arrêt, que le temps nécessaire à ce que le rotor (43) de l'appareil de vidange (4) ait fait sortir l'ancienne suspension de l'appareil de vidange et l'ait remplacée par une suspension neuve venant du broyeur (1), à ce que la suspension reste quelque temps dans l'appareil de vidange pour rendre possible une diminution et une dissolution des bribes et des petits bouts de papier, et à ce que la suspension transportée à l'extérieur de l'appareil de vidange (4) soit ensuite triée dans un dispositif de triage (2);

2. Procédé selon la revendication 1, caractérisé par le fait que la durée de la fermeture est inférieure à 5 minutes, et particulièrement inférieure à 3 minutes;

3. Procédé selon l'une quelconque des revendications 1 ou 2, caractérisé par le fait que de l'eau de dilution est introduite dans la suspension retirée avant son entrée dans l'appareil de vidange (4);

4. Procédé selon l'une quelconque des revendications 1 à 3, caractérisé par le fait que la pâte à papier finie de la suspension retirée de l'appareil de vidange (4) et triée, est de nouveau directement amenée au broyeur (1);

5. Procédé selon l'une quelconque des revendications 1 à 4, caractérisé par le fait qu'on utilise un cribleur perforé en rotation autour d'un axe normalement horizontal comme dispositif de triage pour trier la suspension retirée de l'appareil de vidage (4), la suspension étant amenée à une extrémité du côté frontal du cribleur et le détritus étant retiré à l'extrémité opposée;

6. Procédé selon l'une quelconque des revendications 1 à 5, caractérisé par le fait que dans la zone de raccordement de la conduite (5), au moins une conduite (14) d'eau de dilution est raccordée au broyeur (1);

7. Procédé selon l'une quelconque des revendications 5 ou 6, caractérisé par le fait qu'une sortie principale tangentielle (46) est placée dans la zone du rotor (43);

8. Procédé selon l'une quelconque des revendications 5 à 7, caractérisé par le fait que le rotor est disposé de façon exactement axiale vis-à-vis de la conduite d'alimentation (5).